# EUROPEAN PATENT SPECIFICATION

(11) **EP 4 190 658 B1**
(45) Date of publication and mention of the grant of the patent: **26.06.2024**
(21) Application number: 22211312.8
(22) Date of filing: 05.12.2022
(51) Int. Cl.: B60W 30/14, B60W 50/04, B60W 50/14, B60W 50/08, B60W 60/00, B60W 30/18

(54) **METHOD OF CONTROLLING A VEHICLE**
VERFAHREN ZUR STEUERUNG EINES FAHRZEUGS
PROCÉDÉ DE COMMANDE D'UN VÉHICULE

(30) Priority: 06.12.2021 US 202163286414 P
(43) Date of publication of application: 07.06.2023
(73) Proprietor: TuSimple, Inc., San Diego, CA 92122 (US)
(72) Inventor: Bi, Haimo, San Diego, CA 92122 (US); Han, Xiaoling, San Diego, CA 92122 (US); Jing, Junbo, San Diego, CA 92122 (US); Kurt, Arda, San Diego, CA 92122 (US)
(74) Representative: Morrall, Jonathan Ian McLachlan

(56) References cited:
- WO-A1-2021/144081
- US-A1- 2016 209 841
- US-A1- 2019 118 831
- US-A1- 2021 237 775

## Description

### TECHNICAL FIELD

This invention relates to systems, methods, and apparatus to control one or more parameters of an engine, such as torque, for autonomous driving systems.

### BACKGROUND

Self-driving or autonomous vehicles can be autonomously controlled to navigate along a path to a destination. Autonomous driving generally requires sensors and processing systems that perceive the environment surrounding an autonomous vehicle and make decisions based on that perception to facilitate safe and reliable operation of the autonomous vehicle.
US 2016/209841 A1 discloses that when a driver discovers an obstacle which cannot be detected by an autonomous driving device, and performs a driving operation which causes a manual driving switching threshold value to be exceeded for an operation time less than or equal to an operation threshold value so as to avoid the obstacle, a control unit of the autonomous driving device switches autonomous driving to manual driving, and then the control unit switches manual driving to autonomous driving even if the driver does not perform an autonomous driving switching operation.

### SUMMARY

The invention is defined in the independent claims.

According to the invention as defined in claim 1, a method of controlling a vehicle includes sending, by a computer located on the vehicle, instructions to one or more devices located on the vehicle that cause the vehicle to perform autonomous driving related operations in accordance with the instructions, where the sending the instructions includes sending a set of torque related values over time to control an engine located in the vehicle, where the set of torque related values is sent from the computer to control the engine without converting the set of torque related values to control parameters indicative of positions associated with an accelerator pedal located in the vehicle; receiving an indication that indicates that the accelerator pedal is depressed from an undepressed position; and causing, in response to the receiving the indication, the vehicle to not perform additional autonomous driving related operations.

In some embodiments, the accelerator pedal is in the undepressed position when the set of torque related values are sent from the computer to control the engine. In some embodiments, the set of torque related values are sent from the computer to control the engine via an application programming interface stored in the computer. In some embodiments, the set of torque related values are sent from the computer to control the engine via the application programming interface. In some embodiments, each of the set of torque related values indicate an amount of torque requested by the computer from the engine to perform the autonomous driving related operations. In some embodiments, the method further comprises performing a second determination, by the computer, that devices on or in the vehicle have passed a self-check operation and the vehicle is ready for autonomous driving; and sending, in response to the second determination, a signal or a message that indicates that the devices on or in the vehicle have passed the self-check operation and the vehicle is ready for autonomous driving.

In some embodiments, the signal is indicated by a light bult in the vehicle, or the message is displayed on a display located in the vehicle and associated with the computer.

According to the invention as defined in claim 1, the method further comprises in response to receiving a second indication that indicates a request for initiating autonomous driving: performing a determination that a speed of the vehicle is greater than a pre-determined threshold; and where the instructions that cause the vehicle to perform the autonomous driving related operations are sent to the one or more devices located in the vehicle in response to the performing the determination.

In some embodiments, the pre-determined threshold is 5 miles per hour [8,0 km/h] or 10 miles per hour [16,1 km/h]. In some embodiments, prior to the second determination, the computer and the engine receive signals to turn on within a pre-determined time window. In some embodiments, the pre-determined time window is 30 seconds.

In some embodiments, the method further comprises performing a third determination, by the computer, that devices on or in the vehicle have not passed a self-check operation and the vehicle is not ready for autonomous driving; and sending, in response to the third determination, another signal or another message that indicates that the devices on or in the vehicle have not passed the self-check operation and the vehicle is not ready for autonomous driving. In some embodiments, the vehicle is caused to not perform additional autonomous driving related operations in response to the received the indication and in response to a determination that a position of the accelerator pedal when depressed from the undepressed position is greater than a threshold value. In some embodiments, the threshold value is configurable. In some embodiments, the position of the accelerator pedal when depressed is indicated by a sensor associated with the accelerator pedal. In some embodiments, the sensor includes a position sensor. In some embodiments, one of the set of torque related values indicates that zero torque or no torque is requested by the computer from the engine. In some embodiments, the vehicle is a tractor unit of a semi-trailer truck.

According to the invention as defined in claim 14, the above-described method is embodied in a non-transitory computer readable storage medium. The non-transitory computer readable storage medium includes code that when executed by a processor, causes the processor to perform the methods according to claims 1-13.

According to the invention as defined in claim 15, a system comprises a computer located in a vehicle, the computer comprises a processor configured to implement the above-described methods is provided.

Embodiments of the invention are described in greater detail in the drawings and the following description.

### BRIEF DESCRIPTION OF THE DRAWINGS

FIG. 1 illustrates a block diagram of an example vehicle ecosystem to control an engine of an autonomous vehicle, in line with the invention.
FIG. 2A shows a block diagram of an example scenario where an in-vehicle control computer controls torque of an engine of a vehicle, in line with the invention.
FIG. 2B shows a block diagram of an example scenario where an accelerator pedal controls torque of an engine of a vehicle
FIG. 3 shows a flowchart for controlling an engine of a vehicle, in line with the invention.

### DETAILED DESCRIPTION

In a vehicle, an accelerator pedal or gas pedal can control a torque generated by an engine. For example, when a vehicle is driving on a road, an accelerator pedal is depressed from its position to have an engine generate more torque and the accelerator pedal is released from its position to have the engine generate less torque. Thus, an amount of torque generated by an engine of vehicle is related to or corresponds to a position of the accelerator pedal. However, when such a system is implemented in an autonomous system, a computer located in an autonomous vehicle needs to determine a position of the accelerator pedal corresponding to a desired torque so that the computer can send information related to accelerator pedal position to control the torque generated by the engine.

Such a system presents several technical problems when implemented in an autonomous system. One technical problem is that the computer in the autonomous vehicle needs to constantly compute the position of the accelerator pedal over time as the desired torque in the autonomous vehicle changes over time. Such frequent computations can take limited computational resources in the autonomous vehicle away from other more important computational needs of the autonomous vehicle such as performing signal processing on sensor data to determine vehicles located around the autonomous vehicle and to determine a safe driving operation of the autonomous vehicles (e.g., braking or steering) based on the location and/or speed of those vehicles. To address at least this technical problem, this patent document describes techniques for an in-vehicle control computer located in an autonomous vehicle to control torque of an engine in an autonomous driving operation(s) without performing additional computations to determine the accelerator pedal position. This patent document first describes in Section I an example vehicle ecosystem for controlling an engine of an autonomous vehicle, and then describes in Section II example techniques to control an engine of an autonomous vehicle. For example, the techniques to control an engine includes techniques to switch control of the torque applied by the engine between an in-vehicle control computer and a human driver, and techniques to perform a startup procedure to setup the in-vehicle control computer and the engine.

### I. Example Ecosystem for Controlling an Engine in a Vehicle

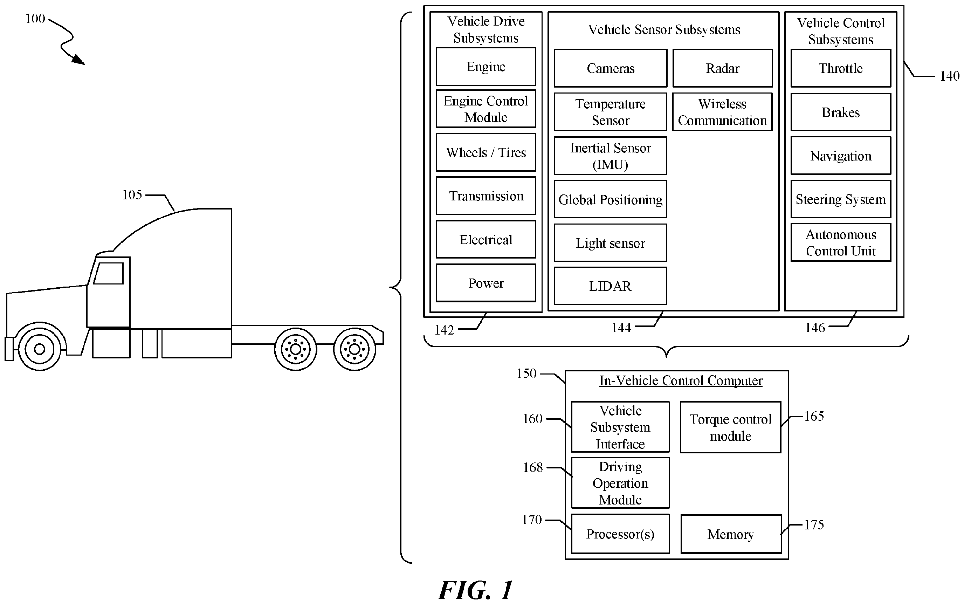

FIG. 1 illustrates a block diagram of an example vehicle ecosystem to control an engine of an autonomous vehicle. The system 100 includes an autonomous vehicle 105, such as a tractor unit of a semi-trailer truck. The autonomous vehicle 105 may include a plurality of vehicle subsystems 140 and an in-vehicle control computer 150. The plurality of vehicle subsystems 140 can include, for example, vehicle drive subsystems 142, vehicle sensor subsystems 144, and vehicle control subsystems 146. FIG. 1 shows several devices or systems being associated with the autonomous vehicle 105. In some embodiments, additional devices or systems may be added to the autonomous vehicle 105, and in some embodiments, some of the devices or systems show in FIG. 1 may be removed from the autonomous vehicle 105.

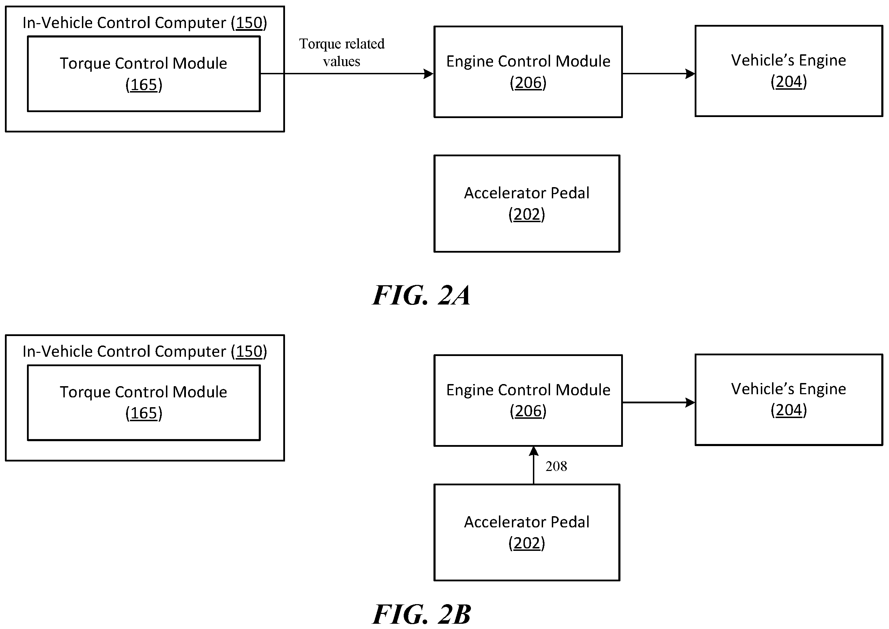

An engine, wheels and tires, a transmission, an electrical subsystem, and a power subsystem may be included in the vehicle drive subsystems 142. The engine of the autonomous truck may be an internal combustion engine (or gas-powered engine), a fuel-cell powered electric engine, a battery powered electric engine/motor, a hybrid engine, or another type of engine capable of actuating the wheels on which the autonomous vehicle 105 (also referred to as vehicle 105 or truck 105) moves. The autonomous vehicle 105 can have multiple engines to drive its wheels. For example, the vehicle drive subsystems 142 can include two or more electrically driven motors. The engine control module (also shown as 206 in FIGS. 2A-2B) located in the autonomous vehicle 105 may be a hardware device that may include a microcontroller, where the microcontroller can receive torque related values from the torque control module 165 in the in-vehicle control computer 150 and can send commands to the engine (e.g., to increase/decrease torque) based on the received torque related values. The transmission of the vehicle 105 may include a continuous variable transmission or a set number of gears that translate power created by the engine of the vehicle 105 into a force that drives the wheels of the vehicle 105. The vehicle drive subsystems 142 may include an electrical system that monitors and controls the distribution of electrical current to components within the vehicle drive subsystems 142 (and/or within the vehicle subsystems 140), including pumps, fans, and actuators. The power subsystem of the vehicle drive subsystems 142 may include components which regulate a power source of the vehicle 105.

Vehicle sensor subsystems 144 can include sensors which are used to support general operation of the autonomous truck 105. The sensors for general operation of the autonomous vehicle may include, for example, one or more cameras, a temperature sensor, an inertial sensor, a global positioning system (GPS) receiver, a light sensor, a LiDAR system, a radar system, and/or a wireless communications system.

The vehicle control subsystems 146 may include various elements, devices, or systems including, e.g., a throttle, a brake unit, a navigation unit, a steering system, and an autonomous control unit. The vehicle control subsystems 146 may be configured to control operation of the autonomous vehicle, or truck, 105 as a whole and operation of its various components. The throttle may be coupled to an accelerator pedal so that a position of the accelerator pedal can correspond to an amount of fuel or air that can enter the internal combustion engine. The accelerator pedal may include a position sensor that can sense a position of the accelerator pedal. The position sensor can output position values that indicate the positions of the accelerator pedal (e.g., indicating the amounts by which the accelerator pedal is depressed or that the accelerator pedal is undepressed). The brake unit can include any combination of mechanisms configured to decelerate the autonomous vehicle 105. The brake unit can use friction to slow the wheels of the vehicle in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically based on, e.g., traffic or road conditions, while, e.g., the autonomous vehicle 105 is in operation. In some embodiments, the navigation unit may be configured to incorporate data from a GPS device and one or more predetermined maps so as to determine the driving path for the autonomous vehicle 105. The steering system may represent any combination of mechanisms that may be operable to adjust the heading of the autonomous vehicle 105 in an autonomous mode or in a driver-controlled mode of the vehicle operation.

The autonomous control unit may include a control system (e.g., a computer or controller comprising a processor) configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some example embodiments, the autonomous control unit may be configured to incorporate data from the GPS device, the radar, the LiDAR, the cameras, and/or other vehicle sensors and subsystems to determine the driving path or trajectory for the autonomous vehicle 105.

An in-vehicle control computer 150, which may be referred to as a vehicle control unit or VCU, can include, for example, any one or more of: a vehicle subsystem interface 160, a torque control module 165, a driving operation module 168, one or more processors 170, and/or a memory 175. This in-vehicle control computer 150 may control many, if not all, of the operations of the autonomous truck 105 in response to information from the various vehicle subsystems 140. The memory 175 may contain processing instructions (e.g., program logic) executable by the processor(s) 170 to perform various methods and/or functions of the autonomous vehicle 105, including those described in this patent document. For instance, the data processor 170 executes the operations associated with vehicle subsystem interface 160 and/or torque control module 165. The in-vehicle control computer 150 can control one or more elements, devices, or systems in the vehicle drive subsystems 142, vehicle sensor subsystems 144, and/or vehicle control subsystems 146. For example, the torque control module 165 in the in-vehicle control computer 150 may operate the autonomous vehicle 105 in an autonomous mode in which the torque control module 165 can send instructions to various elements or devices or systems in the autonomous vehicle 105 to enable the autonomous vehicle to drive along a determined trajectory. For example, the torque control module 165 can send instructions to the steering system to steer the autonomous vehicle 105 along a trajectory, and/or the torque control module 165 can send instructions to apply an amount of brake force to the brakes to slow down or stop the autonomous vehicle 105.

The torque control module 165 can be also configured to communicate and/or interact via a vehicle subsystem interface 160 with the systems of the autonomous vehicle including, e.g., the engine and/or transmission. The torque control module 165 receives data from or sends data and/or commands or instructions to an engine (e.g., via the engine control module as further explained in FIG. 2A) to control the autonomous vehicle to move according to a sequence of time-dependent torque related values such that, e.g., the autonomous vehicle's engine generates the requested torque over time. The vehicle subsystem interface 160 may include a software interface (e.g., application programming interface (API)) through which the torque control module 165 can send instructions to control the engine (e.g., via the engine control module) and/or transmission. For example, the vehicle subsystem interface 160 may include an engine software interface (e.g., a software interface provided by engine manufacturer) through which the vehicle engine control can control or indicate torque related values over time to control the engine (which can also be referred to as controlling the torque generated by the engine). The vehicle subsystem interface 160 can indicate an amount of torque for the engine to generate to control the operation of the engine. The vehicle subsystem interface 160 may also include a software interface to control or select the gear of the transmission.

The memory 175 may include instructions to transmit data to, receive data from, interact with, or control one or more of the vehicle drive subsystems 142, vehicle sensor subsystems 144, or vehicle control subsystems 146. The in-vehicle control computer (VCU) 150 may control the operation of the autonomous vehicle 105 based on inputs received by the VCU from various vehicle subsystems (e.g., the vehicle drive subsystems 142, the vehicle sensor subsystems 144, and the vehicle control subsystems 146). The VCU 150 may, for example, send information (e.g., commands, instructions or data) to the vehicle control subsystems 146 to direct or control functions, operations or behavior of the autonomous vehicle 105 including, e.g., its trajectory, velocity, and signaling behaviors. The vehicle control subsystems 146 may receive a course of action to be taken from one or more modules of the VCU 150 and may, in turn, relay instructions to other subsystems to execute the course of action.

### II. Techniques to Control an Engine in an Autonomous Vehicle

In this Section, techniques are described for an in-vehicle control computer 150 located in an autonomous vehicle 105 to control torque of an engine for performing autonomous driving operation(s) without involving the accelerator pedal. The torque control module 165 in the in-vehicle control computer 150 can use a software interface (e.g., API) stored in the in-vehicle control computer 150 to control an amount of torque applied by the engine in the autonomous vehicle 105 over time. The software interface can allow the torque control module 165 to request torque value(s) over time to control the engine without involving calculation associated with the accelerator pedal position as further explained below.

FIG. 2A shows a block diagram of an example scenario where an in-vehicle control computer 150 controls torque of an engine 204 of a vehicle. When an autonomous vehicle is performing autonomous driving operation(s), the torque control module 165 sends torque related values over time to the engine control module 206 to control the engine 204. The torque control module 165 can send the torque related values via a software interface (which may be located in the in-vehicle control computer 150) to indicate the torque requested from the engine 204 over time. The engine control module 206 can receive the torque related values from the torque control module 165 and can send commands to the engine 204 (e.g., to increase/decrease torque) based on the received torque related values. In the scenario shown in FIG. 2A, a position sensor associated with the accelerator pedal 202 does not send to the engine control module 206 the position values of the accelerator pedal 202 to control the torque of the engine.

The torque control module 165 can determine the required torque related values based on a desired autonomous driving operation and may periodically send via the software interface the torque related values to the engine control module 206 to control the torque of the engine 204. For example, at first time, the torque control module 165 can determine and request the engine 204 to generate a first amount of torque based on the torque control module's 165 determination to have the autonomous vehicle increase its speed, and the torque control module 165 can at a second time later than the first time determine and request the engine 204 to generate a second amount of torque (which is different from the first amount of torque in this example) based on the torque control module's 165 determination that it needs the autonomous vehicle to reduce its speed.

The torque control module 165 can request the engine 204 (e.g., via the engine control module 206) to generate the first and second amount of torque via the software interface without converting the desired torque value to control parameter that indicates an accelerator pedal position. Thus, a technical benefit of this technology is that the torque control module 165 does not calculate or determine a control parameter indicative of an accelerator pedal position to send the control parameter to the engine control module 206 as is done with conventional technology. In this patent document, the term "control parameter" indicative of accelerator pedal position may also be known as "control value" indicative of the accelerator pedal position. In some embodiments, if the torque control module 165 determines that the engine does not need to generate torque, then the torque control module 165 can send a torque value that indicates that zero torque or no torque is requested by the torque control module 165 to the engine control module 206 via the software interface.

One of the technical benefits of having a torque control module 165 control the engine 204 via the software interface and via the engine control module 206 is that it reduces the computational load on the in-vehicle control computer 150 by not frequently performing additional computations to determine the control parameters (or control values) that indicate accelerator pedal positions corresponding to the torque related values determined by the torque control module 165 over time. Another technical benefit of having the torque control module 165 control the engine is that it can reduce the time delay between when torque related values are determined and when the engine is instructed to perform in accordance with the torque related values at least because the torque control module 165 does not need to calculate the control parameters corresponding to the accelerator pedal positions.

### II. (a). Techniques to Disengage Autonomous Driving Related Control of Engine

When the autonomous vehicle 105 is performing autonomous driving operations, the autonomous vehicle 105 is controlled by the in-vehicle control computer 150. As explained in this patent document, the torque control module can control various aspects of the autonomous driving operations (e.g., steering, braking, gear selection, torque of the engine) to enable the autonomous vehicle 105 to drive along a trajectory to a desired destination. However, a human driver located in the autonomous vehicle 105 can disengage autonomous driving operations and take over driving related operations of the autonomous vehicle 105.

FIG. 2B shows a block diagram of an example scenario where an accelerator pedal 202 controls torque of an engine 204 of a vehicle. As mentioned in this patent document and as indicated in FIG. 2A, one of the technical advantages of the technology described in this patent application is that during autonomous driving operation the torque control module 165 can request torque related values from the engine 204 via the engine control module 206 without calculating and sending control parameters to the engine control module 206 to control the engine 204. When the torque control module 165 is performing autonomous driving related operations, the position of the accelerator pedal 202 does not change, and the accelerator pedal 202 is in an undepressed (or neutral) position. In some embodiments, when a human driver depresses the accelerator pedal during autonomous driving operations, a position sensor associated with the accelerator pedal 202 can generate and send to the engine control module 206 a signal 208 that indicates that the accelerator pedal is depressed. When the engine control module 206 determines that the accelerator pedal is depressed, the engine control module 206 does not send torque related values from the torque control module 165 to the engine 204. One or more depressed position of the accelerator pedal by the human driver can be sensed by the position sensor of the accelerator pedal 202 so that the position sensor can send signals 208 that indicate position values to the engine control module 206 to cause the engine 204 to generate the desired torque. Thus, another technical advantage of the technology in this patent document is that a force applied on the accelerator pedal can be used to indicate that autonomous driving operation should be disengaged.

In some embodiments, when the engine control module 206 receives from the position sensor of the accelerator pedal an indication/signal that the accelerator pedal is depressed, the engine control module 206 can send the indication/signal to the torque control module 165 to indicates that the accelerator pedal has been depressed. In such embodiments, when the torque control module 165 receives the signal/indication from the engine control module 206, the torque control module 165 can disengage autonomous driving operation by, for example, not sending torque related values to the engine control module 206 to no longer cause autonomous driving operation of the autonomous vehicle 105. In some embodiments, the torque control module 165 can disengage autonomous driving operations when a position to which the accelerator pedal is depressed from an undepressed position exceeds a configurable threshold value. For example, the sensor associated with the accelerator pedal can output to the torque control module 165 a position value corresponding to a depressed position of the accelerator pedal. In this example, when the torque control module 165 determines that the position value provided by the sensor of the accelerator pedal exceeds a configurable threshold, then the torque control module 165 can disengage autonomous driving operation. One technical advantage of having the torque control module 165 compare a position value corresponding to the depressed position of the accelerator pedal to a configurable threshold is that it can enable the torque control module 165 to avoid disengaging autonomous driving operation when the human driver accidently taps the accelerator pedal but did not intend to disengage autonomous driving operation.

### II, (a). Example Startup Procedure to Setup the In-Vehicle Control Computer and an Engine of a Vehicle

Before and/or when an autonomous vehicle is turned on, a set of startup related operations can be performed to setup an in-vehicle control computer 150 located in the autonomous vehicle 105 to operate with an engine of the autonomous vehicle. For example, when the ignition key or switch of the autonomous vehicle is in the off position or off state, the systems and/or devices in autonomous vehicle are turned off As mentioned in this patent document, a torque control module 165 located in the in-vehicle control computer 150 can control an engine of the autonomous vehicle via a software interface stored in the in-vehicle control computer 150. The software interface may require the engine to synchronize with the in-vehicle control computer 150 within a pre-determined time window (e.g., within the first 30 seconds or within the first 10 seconds) of when the ignition key or switch is in the on or start position to turn on the engine of the autonomous vehicle. Thus, in one example, after the ignition key or switch is moved to the on or start position, the in-vehicle control computer 150 can be started. In another example, the in-vehicle control computer 150 can be first started if a charge of a battery located in the autonomous vehicle can allow autonomous systems to be turned on, and then the ignition switch can be moved to the on or start position to turn on the engine of the autonomous vehicle within the pre-determined time window from when the in-vehicle control computer 150 is turned on.

After the in-vehicle control computer 150 and the autonomous vehicle are turned on within the pre-determined time window, then the torque control module 165 can perform initial self-checks (or self-tests) to determine the operational condition of the various devices and/or systems onboard the autonomous vehicle. If the torque control module 165 determines that the self-checks has passed, then the torque control module 165 can send a signal to cause a light bulb within an autonomous vehicle's dashboard or cab to blink at a first frequency to indicate that the devices (e.g., camera, engine, LiDAR, etc.,) on or in the autonomous vehicle have passed self-check and/or the autonomous vehicle is ready for performing autonomous driving operations.

In some embodiments, if the torque control module 165 determines that the self-checks has passed, then the torque control module 165 can send a message to be displayed on a graphical user interface (GUI) on a display located in the autonomous vehicle, where the displayed message indicates that the devices on or in autonomous vehicle have passed self-check and/or the autonomous vehicle is ready for performing autonomous driving operations. If the torque control module 165 does not pass the self-check then the torque control module can send another signal to the light bulb (or another message to the GUI on the display) to cause the light bulb to blink at a second frequency faster than the first frequency (or to cause the GUI to display that the devices on or in the autonomous vehicle have not passed self-check and/or the autonomous vehicle is not ready for performing autonomous driving operation). A faster blinking light bulb indicates to the driver to turn off the autonomous vehicle and the in-vehicle control computer and restart the startup process because the devices on or in the autonomous vehicle have not passed self-check and/or the autonomous vehicle is not ready for performing autonomous driving operation.

If the torque control module 165 determines that the self-checks have passed and indicates via the light bulb or the message on the display that the autonomous vehicle is ready for autonomous driving, the torque control module 165 can compare a speed of the autonomous vehicle to a pre-determined threshold (e.g., 5 mph or 10 mph [8,0 or 16.1 km/h]) to determine whether to cause autonomous driving related operations to be performed upon receiving an indication to cause autonomous driving related operations to be performed. For example, he driver can drive the autonomous vehicle over a pre-determined threshold and then the driver can indicate via a display associated with the in-vehicle control computer 150 or a switch or a knob to request autonomous driving to commence. Once the torque control module receives an indication that autonomous driving has been requested, and after the torque control module determines that the speed of the autonomous vehicle is greater than the pre-determined threshold, then the torque control module can cause autonomous driving related operations to be performed. For example, as explained in this patent document, after the autonomous driving has been initiated, the torque control module can send instructions over time to control the engine to have the engine generate requested torque related values over time.

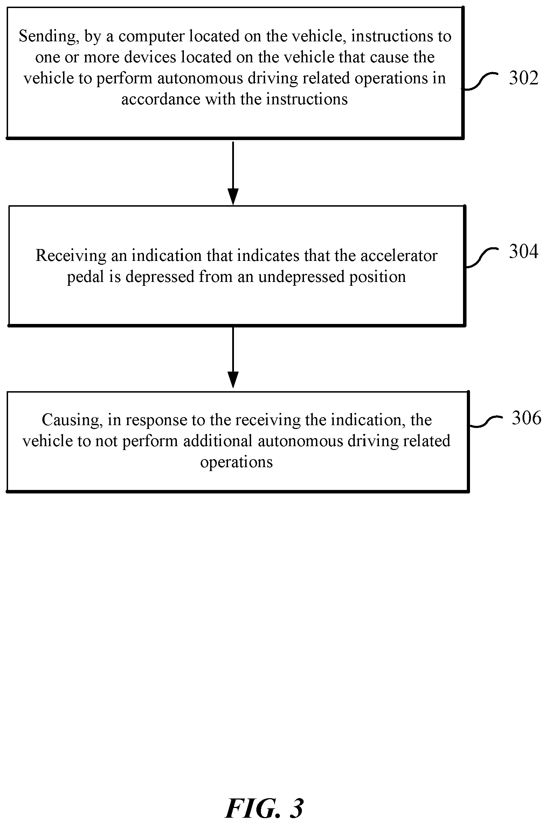

FIG. 3 shows an example flowchart for controlling an engine of a vehicle. Operation 302 includes sending, by a computer located on the vehicle, instructions to one or more devices located on the vehicle that cause the vehicle to perform autonomous driving related operations in accordance with the instructions, where the sending the instructions includes sending a set of torque related values over time to control an engine located in the vehicle, where the set of torque related values is sent from the computer to control the engine without converting the set of torque related values to control parameters indicative of positions associated with an accelerator pedal located in the vehicle. Operation 304 includes receiving an indication that indicates that the accelerator pedal is depressed from an undepressed position. Operation 306 includes causing, in response to the receiving the indication, the vehicle to not perform additional autonomous driving related operations.

In some embodiments, the accelerator pedal is in the undepressed position when the set of torque related values are sent from the computer to control the engine. In some embodiments, the set of torque related values are sent from the computer to control the engine via an application programming interface stored in the computer. In some embodiments, the set of torque related values are sent from the computer to control the engine via the application programming interface. In some embodiments, each of the set of torque related values indicate an amount of torque requested by the computer from the engine to perform the autonomous driving related operations. In some embodiments, the method further comprises performing a second determination, by the computer, that devices on or in the vehicle have passed a self-check operation and the vehicle is ready for autonomous driving; and sending, in response to the second determination, a signal or a message that indicates that the devices on or in the vehicle have passed the self-check operation and the vehicle is ready for autonomous driving.

In some embodiments, the signal is indicated by a light bult in the vehicle, or the message is displayed on a display located in the vehicle and associated with the computer. According to the invention, the method further comprises in response to receiving a second indication that indicates a request for initiating autonomous driving: performing a determination that a speed of the vehicle is greater than a pre-determined threshold; and where the instructions that cause the vehicle to perform the autonomous driving related operations are sent to the one or more devices located in the vehicle in response to the performing the determination. In some embodiments, the pre-determined threshold is 5 miles per hour or 10 miles per hour [8,0 or 16,1 km/h]. In some embodiments, prior to the second determination, the computer and the engine receive signals to turn on within a pre-determined time window. In some embodiments, the pre-determined time window is 30 seconds.

In some embodiments, the method further comprises performing a third determination, by the computer, that devices on or in the vehicle have not passed a self-check operation and the vehicle is not ready for autonomous driving; and sending, in response to the third determination, another signal or another message that indicates that the devices on or in the vehicle have not passed the self-check operation and the vehicle is not ready for autonomous driving. In some embodiments, the vehicle is caused to not perform additional autonomous driving related operations in response to the received the indication and in response to a determination that a position of the accelerator pedal when depressed from the undepressed position is greater than a threshold value. In some embodiments, the threshold value is configurable. In some embodiments, the position of the accelerator pedal when depressed is indicated by a sensor associated with the accelerator pedal. In some embodiments, the sensor includes a position sensor. In some embodiments, one of the set of torque related values indicates that zero torque or no torque is requested by the computer from the engine. In some embodiments, the vehicle is a tractor unit of a semi-trailer truck.

Implementations of the subject matter and the functional operations described in this patent document can be implemented in various systems, semiconductor devices, ultrasonic devices, digital electronic circuitry, or in computer software, firmware, or hardware, including the structures disclosed in this specification and their structural equivalents, or in combinations of one or more of them. Implementations of aspects of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

In this disclosure, LiDAR or LIDAR are used to refer to light detection and ranging devices and methods, and alternatively, or additionally, laser detection and ranging devices and methods. The use of these acronyms does not imply limitation of the described devices, systems, or methods to the use of one over the other.

While this patent document contains many specifics, these should not be construed as limitations on the scope of the invention as claimed, but rather as descriptions of features that may be specific to particular embodiments thereof.

## Claims

1. A method of controlling a vehicle (105), comprising:
sending, by a computer (150) located on the vehicle, instructions to one or more devices (140) located on the vehicle that cause the vehicle to perform autonomous driving related operations in accordance with the instructions, the autonomous driving related operations enabling the vehicle to drive along a determined trajectory,
wherein the sending the instructions includes sending a set of torque related values over time to control an engine (204) located in the vehicle,
wherein the set of torque related values is sent from the computer to control the engine without converting the set of torque related values to control parameters indicative of positions associated with an accelerator pedal (202) located in the vehicle;
receiving an indication that indicates that the accelerator pedal is depressed from an undepressed position;
causing, in response to the receiving the indication, the vehicle to not perform additional autonomous driving related operations,
wherein the method further comprises:
in response to receiving a second indication that indicates a request for initiating autonomous driving:
performing a determination, by the computer, that a speed of the vehicle is greater than a pre-determined threshold; and
wherein the instructions that cause the vehicle to perform the autonomous driving related operations are sent to one or more devices located in the vehicle in response to the performing the determination.

2. The method of claim 1, wherein the accelerator pedal (202) is in the undepressed position when the set of torque related values are sent from the computer (150) to control the engine (204).

3. The method of claim 1 or 2, wherein the set of torque related values are sent from the computer (150) to control the engine (204) via an application programming interface stored in the computer, and optionally wherein the set of torque related values are sent from the computer to control the engine via the application programming interface.

4. The method of any preceding claim, wherein each of the set of torque related values indicate an amount of torque requested by the computer (150) from the engine (204) to perform the autonomous driving related operations.

5. The method of any preceding claim, further comprising:
performing a second determination, by the computer (150), that devices on or in the vehicle (105) have passed a self-check operation and the vehicle is ready for autonomous driving; and
sending, in response to the second determination, a signal or a message that indicates that the devices on or in the vehicle have passed the self-check operation and the vehicle is ready for autonomous driving.

6. The method of claim 5, wherein the signal is indicated by a light bulb in the vehicle (105), or wherein the message is displayed on a display located in the vehicle and associated with the computer (150).

7. The method of any preceding claim, wherein the pre-determined threshold is 5 miles per hour [8,0 km/h] or 10 miles per hour [16,1 km/h].

8. The method of any of claims 5 to 7, wherein, prior to the second determination, the computer (150) and the engine (204) receive signals to turn on within a pre-determined time window, and optionally wherein the pre-determined time window is 30 seconds.

9. The method of any preceding claim, wherein the method further comprises:
performing a third determination, by the computer (150), that devices on or in the vehicle (105) have not passed a self-check operation and the vehicle is not ready for autonomous driving; and
sending, in response to the third determination, another signal or another message that indicates that the devices on or in the vehicle have not passed the self-check operation and the vehicle is not ready for autonomous driving.

10. The method of any preceding claim, wherein the vehicle (105) is caused to not perform additional autonomous driving related operations in response to receiving the indication and in response to a determination that a position of the accelerator pedal (202) when depressed from the undepressed position is greater than a threshold value, and optionally wherein the threshold value is configurable.

11. The method of claim 10, wherein the position of the accelerator pedal (202) when depressed is indicated by a sensor associated with the accelerator pedal, and optionally wherein the sensor includes a position sensor.

12. The method of any preceding claim, wherein one of the set of torque related values indicates that zero torque or no torque is requested by the computer (150) from the engine (204).

13. The method of any preceding claim, wherein the vehicle (105) is a tractor unit of a semi-trailer truck.

14. A computer readable program storage medium having code stored thereon, the code, when executed by a processor, causing the processor to perform the method of any preceding claim.

15. A system comprising a computer (150) located in a vehicle (105), the computer comprising a processor configured to perform the method of any of claims 1 to 13.

## Patentansprüche

1. Verfahren zum Steuern eines Fahrzeugs (105), das Folgendes umfasst:
Senden, durch einen Computer (150), der sich an dem Fahrzeug befindet, von Anweisungen an eine oder mehrere Vorrichtungen (140), die sich an dem Fahrzeug befinden, die bewirken, dass das Fahrzeug mit autonomem Fahren in Zusammenhang stehende Vorgänge gemäß den Anweisungen durchführt, wobei die mit autonomem Fahren in Zusammenhang stehenden Vorgänge ermöglichen, dass das Fahrzeug entlang einer vorbestimmten Trajektorie fährt,
wobei das Senden der Anweisungen Senden eines Satzes von mit dem Drehmoment in Zusammenhang stehenden Werten im Zeitverlauf beinhaltet, um eine Kraftmaschine (204), die sich in dem Fahrzeug befindet, zu steuern,
wobei der Satz von mit dem Drehmoment in Zusammenhang stehenden Werten von dem Computer gesendet wird, um die Kraftmaschine zu steuern, ohne den Satz von mit dem Drehmoment in Zusammenhang stehenden Werten umzuwandeln, um Parameter zu steuern, die Positionen angeben, die mit einem Gaspedal (202), das sich in dem Fahrzeug befindet, assoziiert sind;
Empfangen einer Angabe, die angibt, dass das Gaspedal aus einer nicht betätigten Position betätigt wird;
Bewirken, als Reaktion auf das Empfangen der Angabe, dass das Fahrzeug keine zusätzlichen mit autonomem Fahren in Zusammenhang stehende Vorgänge durchführt,
wobei das Verfahren ferner Folgendes umfasst:
als Reaktion auf das Empfangen einer zweiten Angabe, die eine Anforderung zum Initiieren von autonomem Fahren angibt:
Durchführen einer Bestimmung, durch den Computer, dass eine Geschwindigkeit des Fahrzeugs größer als eine vorbestimmte Schwelle ist; und
wobei die Anweisungen, die bewirken, dass das Fahrzeug die mit autonomem Fahren in Zusammenhang stehenden Vorgänge durchführt, als Reaktion auf das Durchführen der Bestimmung an eine oder mehrere Vorrichtungen, die sich in dem Fahrzeug befinden, gesendet werden.

2. Verfahren nach Anspruch 1, wobei das Gaspedal (202) in der nicht betätigten Position ist, wenn der Satz von mit dem Drehmoment in Zusammenhang stehenden Werten von dem Computer (150) gesendet wird, um die Kraftmaschine (204) zu steuern.

3. Verfahren nach Anspruch 1 oder 2, wobei der Satz von mit dem Drehmoment in Zusammenhang stehenden Werten von dem Computer (150) zum Steuern der Kraftmaschine (204) über eine in dem Computer gespeicherte Anwendungsprogrammierschnittstelle gesendet wird und wobei optional der Satz von mit dem Drehmoment in Zusammenhang stehenden Werten von dem Computer zum Steuern der Kraftmaschine über die Anwendungsprogrammierschnittstelle gesendet wird.

4. Verfahren nach einem der vorhergehenden Ansprüche, wobei jeder des Satzes von mit dem Drehmoment in Zusammenhang stehenden Werten eine Menge des durch den Computer (150) von der Kraftmaschine (204) zum Durchführen der mit autonomem Fahren in Zusammenhang stehenden Vorgänge angeforderten Drehmoments angibt.

5. Verfahren nach einem der vorhergehenden Ansprüche, das ferner Folgendes umfasst:
Durchführen einer zweiten Bestimmung, durch den Computer (150), dass Vorrichtungen an oder in dem Fahrzeug (105) einen Selbstprüfungsvorgang bestanden haben und das Fahrzeug für autonomes Fahren bereit ist; und
Senden, als Reaktion auf die zweite Bestimmung, eines Signals oder einer Nachricht, das bzw. die angibt, dass die Vorrichtungen an oder in dem Fahrzeug den Selbstprüfungsvorgang bestanden haben und das Fahrzeug für autonomes Fahren bereit ist.

6. Verfahren nach Anspruch 5, wobei das Signal durch eine Glühbirne in dem Fahrzeug (105) angegeben wird oder wobei die Nachricht auf einer Anzeige, die sich in dem Fahrzeug befindet und mit dem Computer (150) assoziiert ist, angezeigt wird.

7. Verfahren nach einem der vorhergehenden Ansprüche, wobei die vorbestimmte Schwelle 5 Meilen pro Stunde [8,0 km/h] oder 10 Meilen pro Stunde [16,1 km/h] beträgt.

8. Verfahren nach einem der Ansprüche 5 bis 7, wobei der Computer (150) und die Kraftmaschine (204) vor der zweiten Bestimmung Signale zum Einschalten innerhalb eines vorbestimmten Zeitfensters empfangen und wobei optional das vorbestimmte Zeitfenster 30 Sekunden beträgt.

9. Verfahren nach einem der vorhergehenden Ansprüche, wobei das Verfahren ferner Folgendes umfasst:
Durchführen einer dritten Bestimmung, durch den Computer (150), dass Vorrichtungen an oder in dem Fahrzeug (105) einen Selbstprüfungsvorgang nicht bestanden haben und das Fahrzeug nicht für autonomes Fahren bereit ist; und
Senden, als Reaktion auf die dritte Bestimmung, eines anderen Signals oder einer anderen Nachricht, das bzw. die angibt, dass die Vorrichtungen an oder in dem Fahrzeug den Selbstprüfungsvorgang nicht bestanden haben und das Fahrzeug nicht für autonomes Fahren bereit ist.

10. Verfahren nach einem der vorhergehenden Ansprüche, wobei als Reaktion auf das Empfangen der Angabe und als Reaktion auf eine Bestimmung, dass eine Position des Gaspedals (202) bei Betätigung aus der nicht betätigten Position größer als ein Schwellenwert ist, bewirkt wird, dass das Fahrzeug (105) keine zusätzlichen mit autonomem Fahren in Zusammenhang stehenden Vorgänge durchführt, und wobei optional der Schwellenwert konfigurierbar ist.

11. Verfahren nach Anspruch 10, wobei die Position des Gaspedals (202) bei Betätigung durch einen mit dem Gaspedal assoziierten Sensor angegeben wird und wobei optional der Sensor einen Positionssensor beinhaltet.

12. Verfahren nach einem der vorhergehenden Ansprüche, wobei einer des Satzes von mit dem Drehmoment in Zusammenhang stehenden Werten angibt, dass ein Drehmoment von null bzw. kein Drehmoment durch den Computer (150) von der Kraftmaschine (204) angefordert wird.

13. Verfahren nach einem der vorhergehenden Ansprüche, wobei es sich bei dem Fahrzeug (105) um eine Zugmaschine eines Sattelkraftfahrzeugs handelt.

14. Computerlesbares Programmspeichermedium mit darauf gespeichertem Code, wobei der Code bei Ausführung durch einen Prozessor bewirkt, dass der Prozessor das Verfahren nach einem der vorhergehenden Ansprüche durchführt.

15. System, das einen Computer (150) umfasst, der sich in einem Fahrzeug (105) befindet, wobei der Computer ein Prozessor umfasst, der dazu ausgelegt ist, das Verfahren nach einem der Ansprüche 1 bis 13 durchzuführen.

## Revendications

1. Procédé de commande d'un véhicule (105), comprenant :
l'envoi, par un ordinateur (150) situé sur le véhicule, d'instructions destinées à un ou plusieurs dispositifs (140) situés sur le véhicule, qui amènent le véhicule à exécuter des opérations relatives à une conduite autonome en fonction des instructions, les opérations relatives à une conduite autonome permettant au véhicule de conduire le long d'une trajectoire déterminée,
l'envoi des instructions comprenant l'envoi d'un ensemble de valeurs relatives à un couple au fil du temps pour commander un moteur (204) situé dans le véhicule,
l'ensemble de valeurs relatives à un couple étant envoyé par l'ordinateur pour commander le moteur sans convertir l'ensemble de valeurs relatives à un couple en paramètres de commande indicatifs de positions associées à une pédale d'accélérateur (202) située dans le véhicule ;
la réception d'une indication indiquant que la pédale d'accélérateur est enfoncée depuis une position non enfoncée ;
la commande du véhicule, en réponse à la réception de l'indication, de façon qu'il n'exécute pas d'opérations supplémentaires relatives à une conduite autonome,
le procédé comprenant en outre :
en réponse à la réception d'une deuxième indication indiquant une demande de démarrage d'une conduite autonome :
l'exécution d'une détermination, par l'ordinateur, du fait qu'une vitesse du véhicule est supérieure à un seuil prédéterminé ; et
les instructions qui amènent le véhicule à exécuter les opérations relatives à une conduite autonome étant envoyées à un ou plusieurs dispositifs situés dans le véhicule en réponse à l'exécution de la détermination.

2. Procédé selon la revendication 1, dans lequel la pédale d'accélérateur (202) est dans la position non enfoncée lorsque l'ensemble de valeurs relatives au couple est envoyé par l'ordinateur (150) pour commander le moteur (204).

3. Procédé selon la revendication 1 ou 2, dans lequel l'ensemble de valeurs relatives à un couple est envoyé par l'ordinateur (150) pour commander le moteur (204) via une interface de programmation d'application stockées dans l'ordinateur, et dans lequel, éventuellement, l'ensemble de valeurs relatives à un couple est envoyé par l'ordinateur pour commander le moteur via l'interface de programmation d'application.

4. Procédé selon l'une quelconque des revendications précédentes, dans lequel chaque valeur de l'ensemble de valeurs relatives à un couple indique une quantité de couple demandée au moteur (204) par l'ordinateur (150) pour l'exécution des opérations relatives à une conduite autonome.

5. Procédé selon l'une quelconque des revendications précédentes, comprenant en outre :
l'exécution d'une deuxième détermination, par l'ordinateur (150), du fait que des dispositifs situés sur ou dans le véhicule (105) ont subi avec succès une opération d'auto-contrôle et que le véhicule est prêt pour une conduite autonome ; et
l'envoi, en réponse à la deuxième détermination, d'un signal ou un message qui indique que les dispositifs situés sur ou dans le véhicule ont subi avec succès l'opération d'auto-contrôle et que le véhicule est prêt pour une conduite autonome.

6. Procédé selon la revendication 5, dans lequel le signal est indiqué par une ampoule dans le véhicule (105), ou dans lequel le message est affiché sur un écran d'affichage situé dans le véhicule et associé à l'ordinateur (150).

7. Procédé selon l'une quelconque des revendications précédentes, dans lequel le seuil prédéterminé est de 5 miles par heure [8,0 km/h] ou 10 miles par heure [16,1 km/h].

8. Procédé selon l'une quelconque des revendications 5 à 7, dans lequel, avant la deuxième détermination, l'ordinateur (150) et le moteur (204) reçoivent des signaux pour s'allumer dans une fenêtre temporelle prédéterminée, et dans lequel, éventuellement, la fenêtre temporelle prédéterminée est de 30 secondes.

9. Procédé selon l'une quelconque des revendications, dans lequel le procédé comprend en outre :
l'exécution d'une troisième détermination, par l'ordinateur (150), du fait que des dispositifs situés sur ou dans le véhicule (105) ont échoué à une opération d'auto-contrôle et que le véhicule n'est pas prêt pour une conduite autonome ; et
l'envoi, en réponse à la troisième détermination, d'un autre signal ou un autre message qui indique que les dispositifs situés sur ou dans le véhicule ont échoué à l'opération d'auto-contrôle et que le véhicule n'est pas prêt pour une conduite autonome.

10. Procédé selon l'une quelconque des revendications précédentes, dans lequel le véhicule (105) est amené à ne pas exécuter d'opérations supplémentaires relatives à une conduite autonome en réponse à la réception de l'indication et en réponse à une détermination du fait qu'une position de la pédale d'accélérateur (202) lorsqu'elle est enfoncée depuis la position non enfoncée est supérieure à une valeur seuil, et dans lequel, éventuellement, la valeur seuil est configurable.

11. Procédé selon la revendication 10, dans lequel la position de la pédale d'accélérateur (202), lorsqu'elle est enfoncée, est indiquée par un capteur associé à la pédale d'accélérateur, et dans lequel, éventuellement, le capteur comprend un capteur de position.

12. Procédé selon l'une quelconque des revendications précédentes, dans lequel une valeur de l'ensemble de valeurs relatives à un couple indique qu'un couple nul ou aucun couple est demandé au moteur (204) par l'ordinateur (150).

13. Procédé selon l'une quelconque des revendications précédentes, dans lequel le véhicule (105) est un tracteur d'un camion semi-remorque.

14. Support de stockage d'un programme lisible par ordinateur sur lequel est stocké un code, lequel code, lorsqu'il est exécuté par un processeur, amène le processeur à mettre en œuvre le procédé selon l'une quelconque des revendications.

15. Système comprenant un ordinateur (150) situé dans un véhicule (105), l'ordinateur comprenant un processeur configuré pour mettre en œuvre le procédé selon l'une quelconque des revendications 1 à 13.
